# EUROPEAN PATENT SPECIFICATION

(11) **EP 2 624 593 B1**
(45) Date of publication and mention of the grant of the patent: **23.09.2015**
(21) Application number: 13153793.8
(22) Date of filing: 04.02.2013
(51) Int. Cl.: H04R 5/033, G01P 5/24, H04M 1/05

(54) **Identifying wind direction and wind speed using wind noise**
Identifizierung der Windrichtung und Windgeschwindigkeit unter Verwendung von Windgeräuschen
Identification de la vitesse et de la direction du vent en utilisant le bruit du vent

(30) Priority: 06.02.2012 US 201213366437
(43) Date of publication of application: 07.08.2013
(73) Proprietor: Sony Mobile Communications AB, 221 88 Lund (SE)
(72) Inventor: Nyström, Martin, 282 94 Hörja (SE); Raoufi, Matthew, 226 51 Lund (SE)
(74) Representative: Valea AB

(56) References cited:
- EP-A1- 1 750 483
- WO-A1-00/03498
- WO-A1-2005/041517
- BASS H E ET AL: "EXPERIMENTAL DETERMINATION OF WIND SPEED AND DIRECTION USING A THREE MICROPHONE ARRAY", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 97, no. 1, 1 January 1995 (1995-01-01), page 695/696, XP000491244, ISSN: 0001-4966, DOI: 10.1121/1.412293
- Mirko Tomic: "Wind sensor for iOS", , 29 October 2010 (2010-10-29), XP055060970, internet Retrieved from the Internet: URL:https://itunes.apple.com/de/app/wind-s ensor/id398101772?mt=8 [retrieved on 2013-04-24] & Mirko Tomic: "wind sensor - wind speed meter", , 29 October 2010 (2010-10-29), XP055060973, internet Retrieved from the Internet: URL:http://www.redhotbits.com/wind-sensor/ [retrieved on 2013-04-24]

## Description

### BACKGROUND

The invention relates generally to headphone devices, more particularly, to detecting an object positioned in proximity to one or more headphones.

WO 2005/041517 A1 relates to a device for the integrated control of entertainment and information devices with at least one portable detached unit, in particular, a wearable ultralight headphone which remotely receives and acoustically presents at least one physical parameter from information devices, such as pulse monitor belts, satellite navigation devices for orientation or distance measurement, bicycle computers (speed, pedal frequency etc.) and/or altitude sensors, preferably by means of an interference-free low-frequency radio connection, without distracting the user with multiple optical display devices.

WO 00/03498 A1 discloses a system, a signal bearing medium embodying a program of machine-readable instructions, and a method employing Global Positioning System (GPS) satellites to determine the current pace, the distance traveled and speed of a person, for example a runner, are disclosed. A GPS receiver (30) for receiving signals from GPS satellites is attached to the person. A processor (10) processes the signals received at a plurality of points from sub-sets of GPS satellites to determine the Earth Centered Earth Fixed (ECEF) fix in the x, y, and z planes relative to the center of the earth of each point. The processor detects when the signals are received from a different sub-set of satellites and corrects for the resulting fix error. The processor calculates the relative distance of the segment between the ECEF fixes of each pair of sequentially adjacent points, and adds together the distances of the segments to determine the distance of the path traveled by the person, which is defined by the points.

BASS H E ET AL: "EXPERIMENTAL DETERMINATION OF WIND SPEED AND DIRECTION USING A THREE MICROPHONE ARRAY", THE JOURNAL OF THE ACOUSTAL SOCIETY OF AMERICA, AMERICAN INSTITUTE OF PSYSICS FOR THE ACOUSTICAL COCIETY OF AMERICA, NEW YORK, NY, US, vol. 97, no. 1, 1 January 1995, page 695/696, XP000491244, issn: 0001-4966, DOI: 10.1121/412293, relates to the use of multiple wind sensors and uses an array of three sensors.

### SUMMARY

The invention provides a computer-implemented method for a headset that includes binaural wind sensors to receive wind noise as defined in claim 1. The invention also provides a respective headset device as defined in claim 11. Further embodiments are defined in the dependent claims. The binaural wind sensors include a left wind sensor and a right wind sensor. The method comprises receiving wind noise induced by wind at the binaural wind sensors, determining a sound energy density distribution of the wind noise and matching the sound energy density distribution to one of a plurality of reference sound energy density distributions. Each of the plurality of reference sound energy density distributions includes an associated wind speed and wind direction. Further, the method comprises identifying a wind speed and a wind direction corresponding to the matched reference sound energy density distribution.

In embodiments disclosed herein, the method further comprises identifying a ground speed associated with a user of the headset and determining a user generated velocity of the user based on the ground speed and the wind speed and wind direction.

In embodiments disclosed herein, the method further comprises determining one or more of a user energy consumption, or a user calorie consumption based on the user generated velocity.

In embodiments disclosed herein, the method further comprises outputting the wind speed and wind direction to at least one associated device. The at least one associated device is at least one of a digital running device, a wearable body monitor, a smart watch, or a mobile phone and the at least one associated device displays the wind speed and the wind direction.

In embodiments disclosed herein, the method further comprises identifying the wind speed and the wind direction corresponding to the matched reference sound energy density distribution further comprises identifying a wind direction perpendicular to a lateral plane of the headset. The wind direction is one of a tailwind or a headwind and differentiating between the headwind and the tailwind based on a side vector component of the headwind or tailwind.

In embodiments disclosed herein, identifying the wind direction further comprises determining a difference in sound energy density value between wind noise at the left wind sensor and wind noise at the right wind sensor.

In embodiments disclosed herein, the headset includes at least one associated sensor comprising one of a thermometer, or a barometer. The method further comprises determining an adjusted performance of a user based on the wind speed, wind direction and a metric determined by the at least one associated sensor.

In embodiments disclosed herein, the method further comprises determining a correlation between each of the plurality of reference sound energy density distributions and the associated wind speed and wind direction using a head mount sensing and positioning system.

In embodiments disclosed herein, the method further comprises determining a first ground speed of a user in a first direction and determining a second ground speed of the user in an opposite direction to the first direction, subtracting the second ground speed from the first ground speed to determine a difference between the second ground speed and the first ground speed and dividing the difference by two to determine the wind speed.

In embodiments disclosed herein, the headset comprises one of an in-ear design headset or an on-ear design headset.

In other embodiments herein, a headset device is provided. The headset device comprises binaural wind sensors configured to receive wind noise. The binaural wind sensors include a left wind sensor and a right wind sensor, a memory to store a plurality of instructions, and a processor configured to execute instructions in the memory to receive wind noise generated by wind at the binaural wind sensors, determine a sound energy density distribution of the wind noise and match the sound energy density distribution to one of a plurality of reference sound energy density distributions. Each of the plurality of reference sound energy density distributions includes an associated wind speed and wind direction. The processor is configured to identify a wind speed and a wind direction corresponding to the matched reference sound energy density distribution.

In embodiments disclosed herein, the processor is further configured to identify a ground speed associated with a user of the headset and determine a user generated velocity of the user based on the ground speed and the wind speed and wind direction.

In embodiments disclosed herein, the processor is further configured to output the wind speed and wind direction to at least one associated device. The at least one associated device is at least one of a digital running device, a wearable body monitor, a smart watch, or a mobile phone and the at least one associated device displays the wind speed and the wind direction.

In embodiments herein, the processor is further configured to determine one or more of a user energy consumption, or a user calorie consumption based on the user generated velocity.

In embodiments disclosed herein, when identifying the wind speed and the wind direction corresponding to the matched reference sound energy density distribution, is the processor further configured to identify a wind direction perpendicular to a lateral plane of the headset. The wind direction is one of a tailwind or a headwind. The processor is configured to differentiate between the headwind and the tailwind based on a side vector component of the headwind or tailwind,

In embodiments disclosed herein, the headset is geometrically designed to substantially maximize the wind noise induced at the binaural wind sensors.

In embodiments disclosed herein, the headset comprises one of an in-ear design headset and an on-ear design headset.

In still other embodiments disclosed herein, a computer-readable medium is provided. The computer readable medium includes instructions to be executed by a processor, the instructions including one or more instructions, when executed by the processor, for causing the processor to receive wind noise induced by wind at binaural wind sensors. The binaural wind sensors include a left wind sensor and a right wind sensor. The instructions further includes one or more instructions, when executed by the processor, for causing the processor to determine a sound energy density distribution of the wind noise and match the sound energy density distribution to one of a plurality of reference sound energy density distributions. Each of the plurality of reference sound energy density distributions includes an associated wind speed and wind direction. The instructions further includes one or more instructions, when executed by the processor, for causing the processor to identify a wind speed and a wind direction corresponding to the matched reference sound energy density distribution.

In embodiments disclosed herein, the one or more instructions further includes instructions to identify a ground speed associated with a user of the headset and determine a user generated velocity of the user based on the ground speed and the wind speed and wind direction.

In embodiments disclosed herein, the wind speed and the wind direction corresponding to the matched reference sound energy density distribution, the one or more instructions further includes instructions to identify a wind direction perpendicular to a lateral plane of the headset. The wind direction is one of a tailwind or a headwind. The one or more instructions further includes instructions to differentiate between the headwind and the tailwind based on a side vector component of the headwind or tailwind.

### BRIEF DESCRIPTION OF THE DRAWINGS

The accompanying drawings, which are incorporated in and constitute part of this specification, illustrate one or more embodiments described herein and, together with the description, explain the embodiments. In the drawings:
Fig. 1 illustrates concepts described herein for measuring wind using a headset;
Figs. 2A and 2B illustrate exemplary headphones consistent with embodiments described herein;
Fig. 3 is a block diagram of exemplary components of a device of Figs. 1, 2A and 2B;
Fig. 4 is a functional block diagram of a wind measurement application consistent with embodiments described herein;
Figs. 5A, 5B, 5C and 5D illustrate exemplary sound energy density distributions for wind noise consistent with embodiments described herein;
Fig. 6 is a flow diagram of an exemplary process of measuring wind using a headset in a manner consistent with implementations described herein; and
Fig. 7 is a flow diagram of an exemplary process of determining user generated velocity using a headset in a manner consistent with implementations described herein.

### DETAILED DESCRIPTION

The following detailed description refers to the accompanying drawings. The same reference numbers in different drawings may identify the same or similar elements. Also, the following detailed description is exemplary and explanatory only and is not restrictive of the invention, as claimed.

Embodiments described herein relate to devices, methods, and systems for determining wind speed and direction at a headset. The headset may include a right headphone and a left headphone. Each of the headphones may include a binaural wind sensor. A processor associated with the binaural wind sensors may determine the wind speed and direction based on wind noise induced in the binaural wind sensors.

Consistent with embodiments described herein, a personal velocity of a user may be determined based on information regarding ground speed associated with a user of the headset and the wind speed and direction determined using the binaural wind sensors.

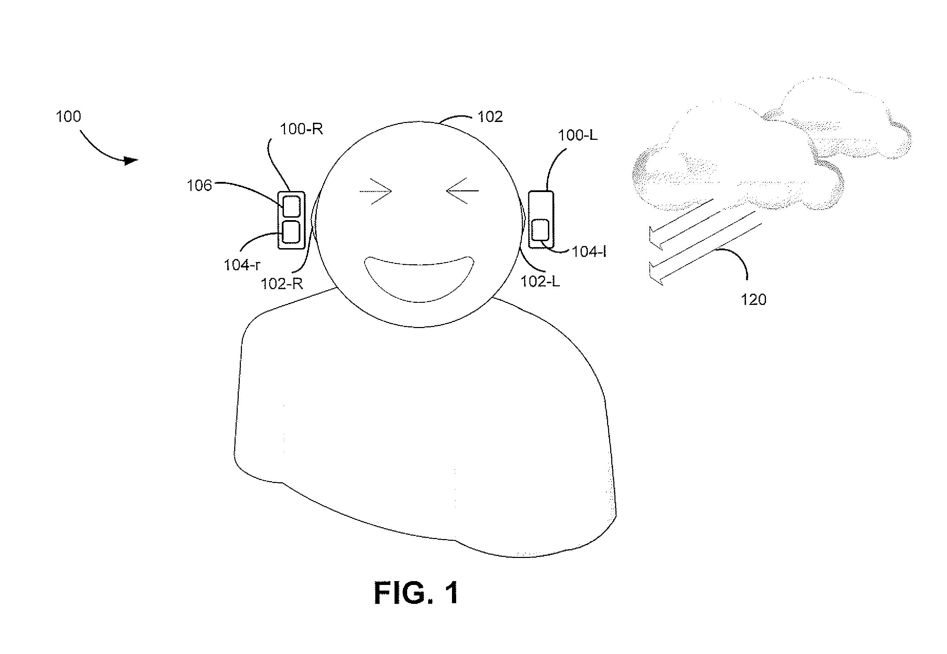

Fig. 1 illustrates concepts described herein. More specifically, Fig. 1 shows an exemplary headset 100 consistent with embodiments described herein. Headset 100 may include a left headphone 100-L, which may be positioned in proximity to a left ear 102-L of a user 102, and a right headphone 100-R, which may be positioned in proximity to a right ear 102-R of user 102. Each of headphones 100-L and 100-R may include binaural wind sensors 104-1 and 104-r respectively. Headset 100 may also include a microcontroller unit (MCU) 106 that interfaces with binaural wind sensors 104-1 and 104-r. The configuration of components of headset 100 illustrated in Fig. 1 is for illustrative purposes only. Although not shown, headset 100 may include additional, fewer and/or different components than those depicted in Fig. 1. Headset 100 may also include other components of a headset 100 and/or other configurations may be implemented. For example, headset 100 may include speakers, security devices, one or more network interfaces, such as interfaces for receiving and sending information from/to other devices, one or more processors, etc.

Headset 100 may determine wind speed and direction of wind 102 with respect to user 102 based on wind noise induced in binaural wind sensors 104-l and 104-r. Headset 100 may be used when user 102 is in motion, such as when user 102 is jogging, cycling, etc. Headset 100 may also determine wind speed and wind direction of wind 120 when user 102 is stationary.

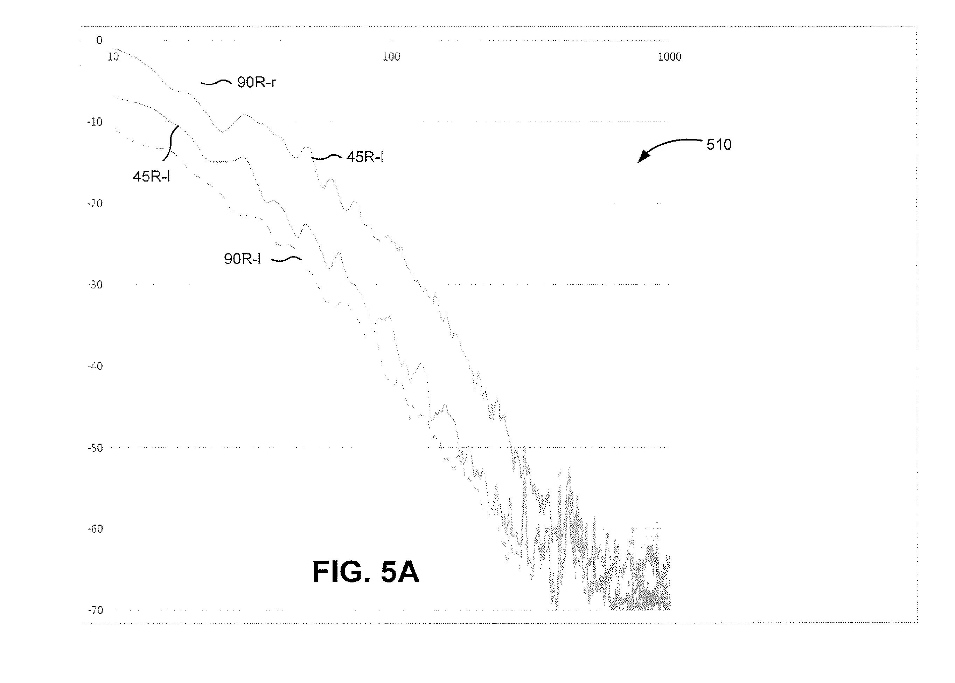

Binaural wind sensors 104-l and 104-r may each include a microphone that may receive wind noise induced by wind blowing towards user 102. Binaural wind sensors 104-l and 104-r include a left wind sensor (binaural wind sensor 104-l) and a right wind sensor (binaural wind sensor 104-r). Headset 100 may also include a processor that may determine a sound energy density distribution of the wind noise based on the wind noise received at binaural wind sensors 104-l and 104-r that includes sound energy density values for the wind noise. The sound energy density value of the wind noise describes the sound field measured at each of binaural wind sensors 104-l and 104-r. The sound energy density distribution is a pattern of the wind noise based on a frequency and energy of the wind noise, such as the distributions shown in Figs. 5A-5D and described below.

Headset 100 (i.e., a processor associated with or integrated into headset 100) may identify a sound energy density distribution (e.g., as shown in Figs. 5A-5D) of the wind noise at binaural wind sensors 104-l and 104-r. Headset 100 may determine wind speed based on a correlation between the sound energy density levels (e.g., measured in decibels (dB)) of the wind noise and a corresponding wind speed. Headset 100 may determine wind direction based on a difference in decibel levels between sound energy density distributions for wind noise detected at binaural wind sensors 104-l and 104-r, respectively (i.e., a right and left ear of user 102). Wind that blows in a plane parallel to motion (or face forward positioning) of the user will have lower differences in decibel levels between wind noise detected at binaural wind sensors 104-l and 104-r when compared to wind that has a vector component that is perpendicular to the motion of user 102 (i.e., wind blowing from a particular side of user 102).

Headset 100 may transmit the determined wind speed and wind direction to a device, such as a digital running device, a wearable body monitor, a smart watch, mobile phone, etc., associated with headset 100 via a signal provided to the device. The device may display (e.g. on a graphical user interface (GUI) of the device) the wind speed and direction. Alternatively, headset 100 (or the associated device) may use the wind speed and direction to determine further information related to user 102, such as determinations of user velocity(i.e., user generated velocity), calorie burning rate, etc., as described below. The user generated velocity of user 102 may be a velocity that user 102 generates, or that is generated by user 102 independent of wind 120 in an environment (i.e., the user generated velocity may be a ground speed that user 102 would generate (i.e., move at) in the same environment if there was no wind). The ground speed is the rate at which user 102 moves relative to the ground and may be measured by global positioning system (GPS) device.

Headset 100 may determine metrics associated with user 102, such as user generated velocity, user energy consumption, etc., based on the wind direction and wind speed and a ground speed associated with user 102. Headset 100 may be used in systems for determining user generated velocity of user 102 when user 102 is in motion, such as when user 102 is walking, jogging, running, cycling, etc. Headset 100 may determine a user generated velocity of user 102 based on the associated ground speed of user 102 and the wind speed and direction of wind in which user 102 moves.

The wind noise induced in each of binaural wind sensors 104-l and 104-r may also be dependent on construction of headset 100, such as particular materials used in headset 100, the physical profile (i.e., geometric design) of headset 100 and positioning of objects that may obstruct the wind with regard to user 102 and headset 100, such as hair, scarves, caps, etc. Headset 100 may be geometrically designed to substantially maximize the wind noise induced at binaural wind sensors 104-l and 104-r.

As described below, a processor associated with headset 100 may determine the wind speed and direction of wind 120 blowing towards headset 100 based on a correlation between wind noise induced in binaural wind sensors 104-l and 104-r and a particular wind speed and direction. There may be different patterns of sound energy density distribution for wind noise in binaural wind sensors 104-l and 104-r that include noise levels and frequency content based on a direction from which wind 120 is blowing. The processor may identify the correlation between the wind noise and the wind speed and direction for particular frequencies, in many instances lower frequency ranges of the wind noise. Headset 100 may identify when the correlation decreases at a threshold wind speed (e.g., headset 100 may identify that when the probability of an error in wind measurement increases because of the strength of the wind).

In one embodiment, headset 100 may include additional sensors that utilize the wind direction and wind speed to determine additional information relevant to user 102. For example, headset 100 may include associated sensors, such as a thermometer and barometer, that may be used along with wind direction and wind speed measurements to determine an adjusted performance of user 102 based on a combination of factors, such as pressure, temperature and wind. The adjusted performance may provide a standardized measurement of user 102's performance relative to predetermined conditions (e.g., the adjusted performance may equate to user 102's projected performance in an environment that is windless and has a standardized temperature and pressure).

According to another embodiment, headset 100 may include provide input for body metric monitors, such as calorie counters, etc., and may be used in conjunction with other devices, such as pulse monitors, to evaluate user 102's physical performance.

According to another embodiment, headset 100 may calibrate measurement of wind speed and wind direction using head mount sensing and positioning systems, etc. The head mount sensing and positioning systems may be manual or automatic. Alternatively, headset 100 may calibrate measurement of wind speed and wind direction in a controlled environment, such as a wind tunnel.

According to another embodiment, headset 100 may calibrate measurement of wind speed and wind direction by recording the ground speed of user 102 when user 102 goes back and forth over a defined route in a steady wind. In this instance, the ground speed associated with user 102 may be the user generated velocity plus wind speed in one direction and user generated velocity minus the wind speed in the opposite direction. Headset 100 may determine the wind speed by subtracting a first ground speed in a first direction from a second ground speed (e.g., a return ground speed) in the opposite direction to the first direction and dividing the difference by two to determine the wind speed.

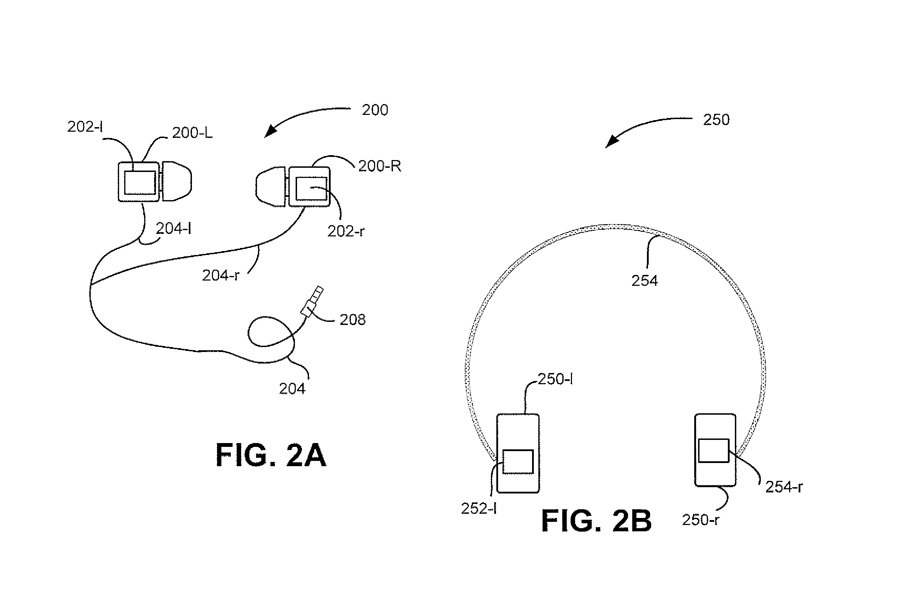

Fig. 2A illustrates an in-ear design headset 200 consistent with embodiments described herein. More specifically, Fig. 2A shows an overview of a pair 200 of in-ear style headphones 200-l and 200-r (sometimes referred to as "earbuds"). The configuration of components of headset 200 illustrated in Fig. 2A is for illustrative purposes only. Although not shown, headset 200 may include additional, fewer and/or different components than those depicted in Fig. 2A.

As shown in Fig. 2A, in-ear design headset 200 may include wired headphones 200-l and 200-r and may have a small form factor with plastic buds or similar design suitable for fitting into the ears 102-L and 102-R of user 102. In-ear design headset 200 may include an input/output jack 208 that connects to headphones 200-l and 200-r via wires 204-l and 204-r, which may be integrated into a single wire 204. Audio signals may be received from a user device (not shown) via input/output jack 208.

In-ear design headset 200 may include binaural wind sensors 202-l and 202-r, which may face outwards from user 102 in order to receive wind noise from wind 120 in an environment in which user 102 may be positioned. In-ear design headset 200 may include material that may reduce interference with binaural wind sensors 202-l and 202-r from audio signals provided to headset 200 (e.g., from music provided to user 102). Further, in-ear design headset 200 may include wind measurement logic that may determine the wind speed and direction of wind 102 based on the determined wind noise in binaural wind sensors 202-l and 202-r.

Fig. 2B illustrates an on ear design headset 250 consistent with embodiments described herein. More specifically, Fig. 2B shows an overview of a pair 250 of on-ear style headphones 250-l and 250-r (sometimes referred to as "padded ear shell" headphones). The configuration of components of headset 250 illustrated in Fig. 2B is for illustrative purposes only. Although not shown, headset 250 may include additional, fewer and/or different components than those depicted in Fig. 2B.

As shown in Fig. 2B, on-ear design headset 250 may have a padded ear shell and a hoop running around or on top of the head. On-ear design headset 250 may have a comparatively larger form factor than in-ear design headset 200. In either implementation of headset 100 (i.e., in-ear design headset 200 or on-ear design headset 250 shown in Fig. 2A and Fig. 2B, respectively), headset 100 may be implemented to determine wind noise and wind direction using binaural wind sensors. Implementations of headset 200 and headset 250 may be guided by particular size and form restrictions for each solution.

On-ear design headset 250 may include binaural wind sensors 252-l and 252-r which may determine wind speed and wind direction similarly as described with respect to binaural wind sensors 104-l and 104-r. On-ear design headset 250 may be further designed to increase the accuracy of wind speed and direction measurement by including features that direct or enhance placement of headphones 250-l and 250-r, such as a waveguide design for headphones phones 250-l and 250-r. The placement of phones 250-l and 250-r may substantially minimize interference with wind measurement from headgear of user 102, such as hats, caps, etc., and from head features of user 102, such as ear shape, hair, etc.

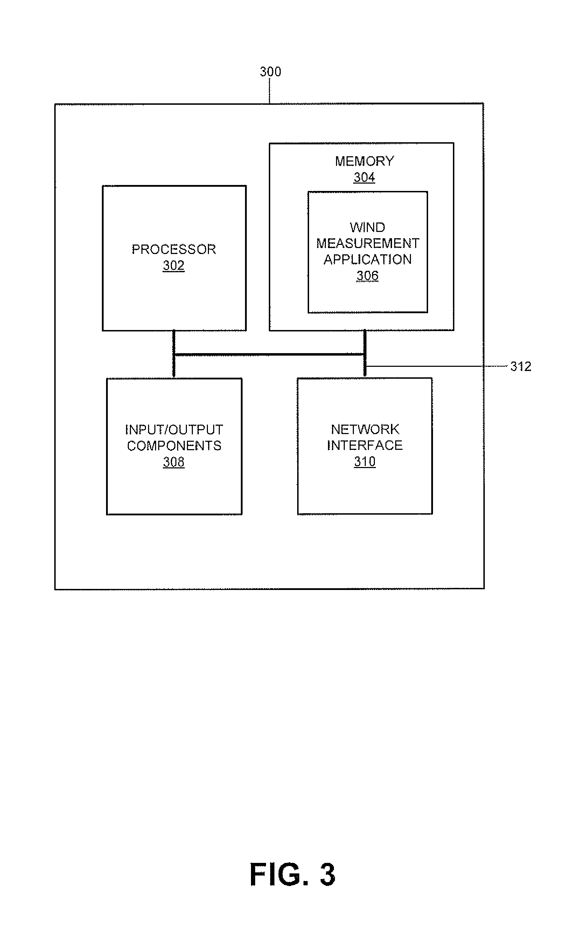

Fig. 3 is a block diagram of exemplary components of device 300. Device 300 may represent any one of headset 100, 200, or 250, and/or components of the headsets, such as MCU 106, or binaural wind sensors 102-l and 102-r, binaural wind sensors 202-l and 202-r or binaural wind sensors 252-l and 252-r. As shown in Fig. 3, device 300 may include a processor 302, a memory 304, input/output components 308, a network interface 310, and a communication path 312. In different implementations, device 300 may include additional, fewer, or different components than the ones illustrated in Fig. 3. For example, device 300 may include additional network interfaces, such as interfaces for receiving and sending data packets.

Processor 302 may include a processor, a microprocessor, an Application Specific Integrated Circuit (ASIC), a Field Programmable Gate Array (FPGA), and/or other processing logic (e.g., audio/video processor) capable of processing information and/or controlling device 300.

Memory 304 may include static memory, such as read only memory (ROM), and/or dynamic memory, such as random access memory (RAM), or onboard cache, for storing data and machine-readable instructions. Memory 304 may also include storage devices, such as a floppy disk, compact disc read only memory (CD ROM), compact disc (CD) read/write (R/W) disc, and/or flash memory, as well as other types of storage devices.

Memory 304 may include wind measurement application 306. Wind measurement application 306 may include data and machine-readable instructions to measure wind speed and wind direction based on data regarding sound energy density distribution of wind noise. Wind measurement application 306 may be executed by processor 302. Wind measurement application 306 may determine wind speed based on wind noise. Wind measurement application 306 may determine wind direction based on a comparison of wind noise in binaural wind sensors 104-l and 104-r as described herein.

Input/output components 308 may include binaural wind sensors 104-l and 104-r, speakers, a barometer, a thermometer, a microphone, Universal Serial Bus (USB) lines, and/or other types of components for converting physical events or phenomena to and/or from digital signals that pertain to device 300.

Network interface 310 may include any transceiver-like mechanism that enables device 300 to communicate with other devices and/or systems. For example, network interface 310 may include mechanisms for communicating via a network, such as the Internet, a terrestrial wireless network (e.g., a WLAN), a cellular network, a satellite-based network, a wireless personal area network (WPAN), etc. Additionally or alternatively, network interface 310 may include a modem, an Ethernet interface to a LAN, and/or an interface/ connection for connecting device 300 to other devices (e.g., a Bluetooth interface).

Communication path 312 may provide an interface through which components of device 300 may communicate with one another.

In different implementations, device 300 may include additional, fewer, or different components than the ones illustrated in Fig. 3. For example, device 300 may include one or more network interfaces, such as interfaces for receiving and sending information from/to other devices.

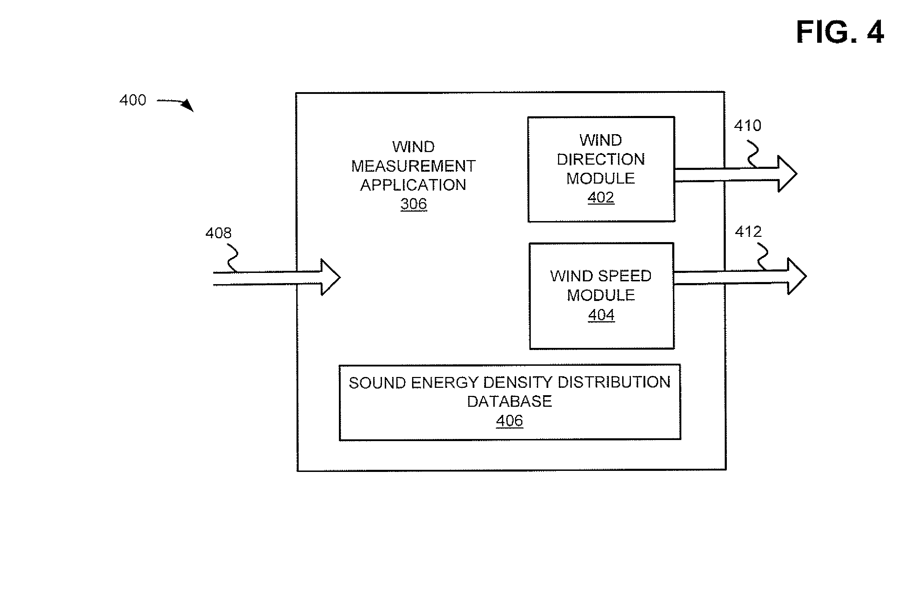

Fig. 4 is a diagram illustrating data flow 400 associated with wind measurement using wind measurement application 306 at headset 100, 200 or 250. Wind measurement application 306 may include a wind direction module 402, a wind speed module 404, and a sound energy density distribution database 406. Wind measurement application 306 may determine wind direction 410 using wind direction module 402, and sound energy density distribution database 406. Wind measurement application 306 may determine wind speed 412 using a wind speed module 404, and sound energy density distribution database 406. As shown in Fig. 4, wind measurement application 306 may determine sound energy density distributions 408 for wind noise from each of binaural wind sensors 104-l and 104-r based on wind noise received in each of binaural wind sensors 104-l and 104-r. The particular arrangement and number of components in data flow 400 as shown in Fig. 4 is illustrated for simplicity.

Wind direction module 402 may determine wind direction 410 based on sound energy density distributions 408 for both binaural wind sensors 104-l and 104-r associated with the wind noise and matching sound energy density distribution that have defined wind speeds and directions. Wind direction module 402 may determine wind direction 410 based on a pattern of sound energy density distribution and a difference between the sound energy density distribution for both binaural wind sensors 104-l and 104-r. A greater difference between sound energy density distribution patterns for binaural wind sensors 104-l and binaural wind sensors 104-r may indicate a further deviation from a wind direction that is parallel to a lateral plane of headset 100 (and consequently a wind that is perpendicular to the lateral plane of headset 100). For example, wind direction module 402 may compare the sound energy density distributions 408 of wind noise with calibrated sound energy density distributions for both binaural wind sensors 104-l and 104-r stored in energy density distribution database 408, such as those shown in Figs. 5A to 5C, that correspond to particular wind speeds and wind directions as described hereinbelow.

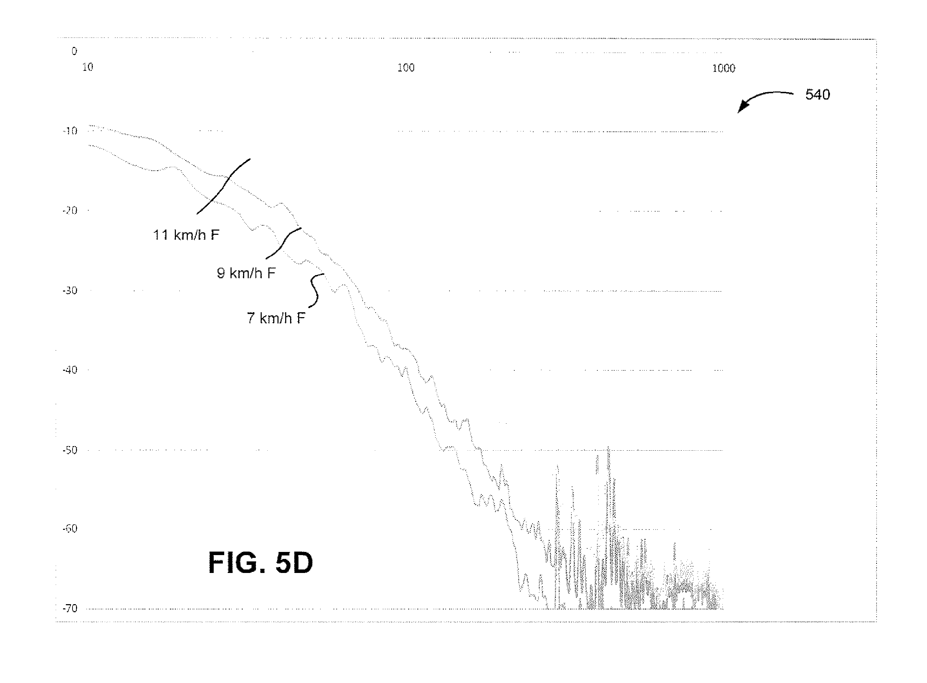

Wind speed module 404 may determine wind speed 412 based on sound energy density distributions 408 and matching sound energy density distribution that have defined wind speeds. For example, wind speed module 404 may compare sound energy density distributions 408 with calibrated sound energy density distributions stored in energy density distribution database 408, such as those shown in Fig. 5D, that correspond to particular wind speeds as described below.

Data flow 400 may be described with respect to sound energy density distributions 510, 520, 530 and 540 as shown in Figs. 5A-5D, which may be sound energy density distributions stored in sound energy density distribution database 406. Sound energy density distributions 510, 520, 530 and 540 provide examples of distribution patterns that may be correspond to wind noise generated by wind 120 from different angles around user 102.

Wind 120 blowing towards headset 100 may generate wind noise that may be detected by binaural wind sensors 104-l and 104-r. A processor associated with binaural wind sensors 104-l and 104-r (e.g., processor 302) may identify corresponding sound energy density distributions 510 based on a frequency of the wind noise illustrated on the horizontal axis and an energy density of the wind noise (measured in pascals (Pas)) illustrated on the vertical axis of sound energy density distributions 510, 520, 530 and 540 shown in Figs. 5A-5D, respectively. The processor may use the sound energy density distributions to estimate wind speed and wind direction. The wind directions are described with respect to the facial direction of user 102 (i.e., the direction of the wind is described with respect to the direction in which user 102's nose points). Higher wind speed may correlate to higher noise levels and wider bandwidth of the noise detected at binaural wind sensors 104-l and 104-r.

In one embodiment, as described with respect to Fig. 5A, binaural wind sensors 104-l and 104-r may receive wind noise that includes a sound energy density distribution for the wind noise that corresponds to one of the sound energy density distributions 510. In this instance wind 120 may come towards user 102 from 90 degrees to the right of user 102, and there may be a difference in the noise induced in right (90R-r) and left (90R-l) binaural wind sensors 104-l and 104-r, respectively, as shown in Fig. 5A. Similarly, wind 120 may come towards user 102 from 45 degrees to the right of user 102, and there may be a difference in the noise induced in right (45R-r) and left (45R-l) binaural wind sensors 104-l and 104-r, respectively, as also shown in Fig. 5A. The characteristic sound energy density distribution for wind 120 that comes towards user 102 from 45 degrees to the right of user 102 may differ from that of the sound energy density distribution for wind 120 that comes towards user 102 from 90 degrees to the right of user 102. A processor (e.g., processor 302 or alternatively a processor of an associated device that receives wind noise measurements from binaural wind sensors 104-l and 104-r) associated with binaural wind sensors 104-l and 104-r may determine wind direction 410 based on this difference in wind levels from binaural wind sensors 104-l and 104-r.

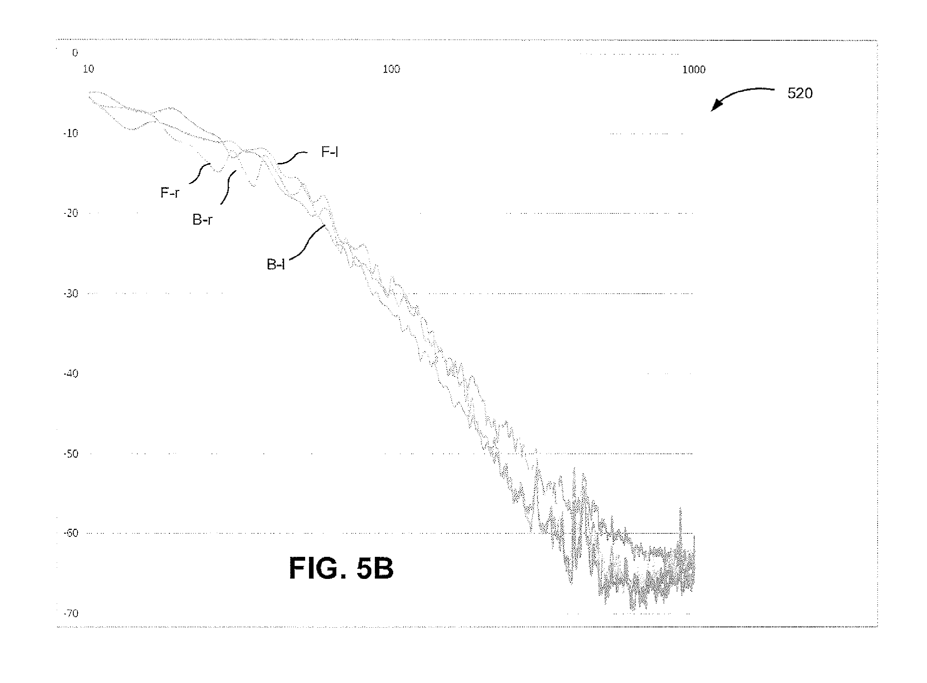

According to another embodiment, as described with respect to Fig. 5B, binaural wind sensors 104-l and 104-r may identify a sound energy density distribution for the wind noise that corresponds to one of the sound energy density distributions 520. In this instance, sound energy density distribution 520 may include wind noise from a headwind to user 102 (F-r and F-l, respectively, reflecting the noise from a headwind at the right and left of user 102) and a tailwind to user 102 (B-r and B-l, respectively, reflecting the noise from a tailwind at the right and left of user 102). As shown, the characteristic sound energy density distributions for headwinds and tailwinds may be similar, in that the sound energy density distribution of the wind noise for both left and right ears may converge. Wind measurement application 306 may identify the wind noise from wind that blows parallel to a forward plane of motion of user 102 as either a tailwind or a headwind. In order to distinguish between the tailwind and the headwind, wind measurement application 306 may monitor wind noise for variances (e.g., the wind shifts from blowing directly parallel to user 102's plane of forward motion) from the wind that blows parallel to a forward plane of motion of user 102 to identify side vector components of the wind which may indicate whether the wind is a tailwind or a headwind.

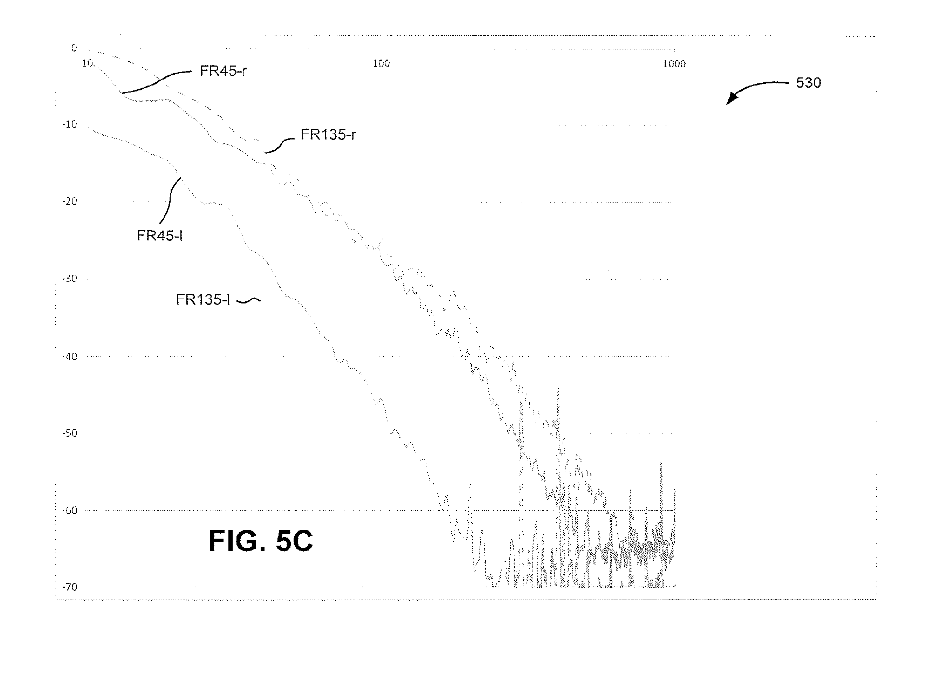

According to another embodiment, as described with respect to Fig. 5C, a processor associated with binaural wind sensors 104-l and 104-r may differentiate sound energy density distributions 530 based on wind noise from winds 120 that include a large vector component from headwinds or tailwinds, but also include an additional vector component from side winds. For example, wind 120 from 45 degrees front right of user 102 (shown as FR45-l and FR45-r for each of binaural wind sensors 104-l and 104-r, respectively) and wind from 135 degrees front right of user 102 (shown as FR135-l and FR135-r for each of binaural wind sensors 104-l and 104-r, respectively) may be distinguished based on differences in the characteristic sound energy density distributions. The difference in sound energy density distributions (i.e., deviation from symmetry) may be caused by features of user 102's head such as user 102's ears and head shape. Additionally, because wind 102 is very seldom constant in a particular direction, the processor (e.g., processor 302) associated with binaural wind sensors 104-l and 104-r may determine whether the direct wind is a headwind or tailwind based on variations (i.e., turbulence) in the wind direction.

According to another embodiment, as described with respect to Fig. 5D, the processor associated with binaural wind sensors 104-l and 104-r may determine wind speed based on a correlation between wind speed and wind noise. Increasing wind speed (e.g., as shown at 7 kilometers per hour (km/h) from the front (F) (i.e., a 7 km/h headwind), 9 km/h F, and 11 km/h F) results in increasing decibel levels for the sound energy density distributions.

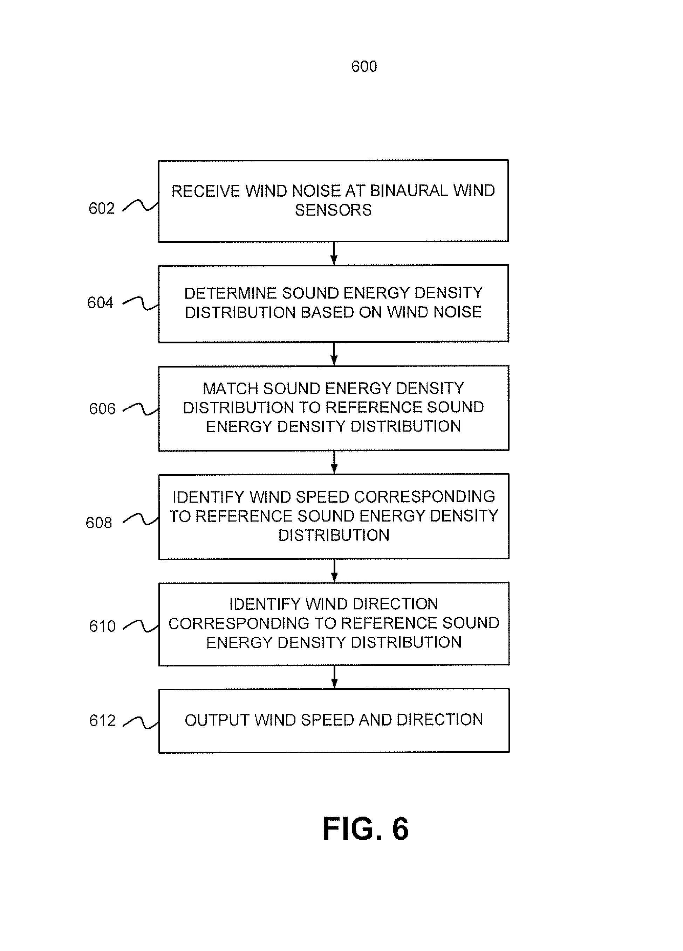

Fig. 6 is a flowchart of an exemplary process 600 for determining wind speed and wind direction using a headset that includes binaural wind sensors 104-l and 104-r in a manner consistent with implementations described herein. Process 600 may execute in processor 302 that is associated with or integrated into a headset 100. It should be apparent that the process discussed below with respect to Fig. 6 represents a generalized illustration and that other elements may be added or existing elements may be removed, modified or rearranged without departing from the scope of process 600.

Headset 100 may receive wind noise from wind 120 blowing towards user 102 at binaural wind sensors 104-l and 104-r (block 602). For example, headset 100, including binaural wind sensors 104-l and 104-r, maybe positioned on the head of user 102. Wind noise may be induced in binaural wind sensors 104-l and 104-r when wind blows towards user 102.

At block 604, headset 100 may determine a sound energy density distribution of the wind noise at each of binaural wind sensors 104-l and 104-r. For example, headset 100 may measure the sound energy over a range of frequencies and determine a relationship between sound energy density (measured in pascals) and a range of frequencies for the wind noise, such as shown in Figs. 5A-5D.

At block 606, headset 100 may compare the sound energy density distribution of the wind noise with reference sound energy density distributions stored in database 406 to determine a corresponding reference sound energy density distributions.

The reference sound energy density distributions may include associated wind speeds and wind directions. Headset 100 may be calibrated by associating the reference sound energy density distributions with associated wind speeds and wind directions under identified conditions. In other words, the sound energy density distributions stored in database 406 may be associated with predetermined wind speeds and directions.

At block 608, headset 100 may identify the wind direction corresponding to the reference sound energy density distribution.

According to one embodiment, headset 100 may identify the wind direction with respect to a plane that is parallel to a lateral plane of headset 100 and user 102 (i.e., headset 100 may identify the wind direction as either a tailwind or headwind). Headset 100 may differentiate between a headwind or tailwind based on a side vector component associated with the headwind or tailwind. The side vector component provides an indication of the wind that blows in a direction parallel to the center of mass of headset 100 (i.e., from the left side or the right side of user 102). For example, headset 100 may identify wind 120 as a headwind or tailwind based on preceding indications of wind direction that include the side vector component.

At block 610, headset 100 may identify the wind speed corresponding to the reference sound energy density distribution. That is, processor 302 may determine the wind speed as corresponding to the wind speed of the sound energy density distribution that most closely matches the measured distribution.

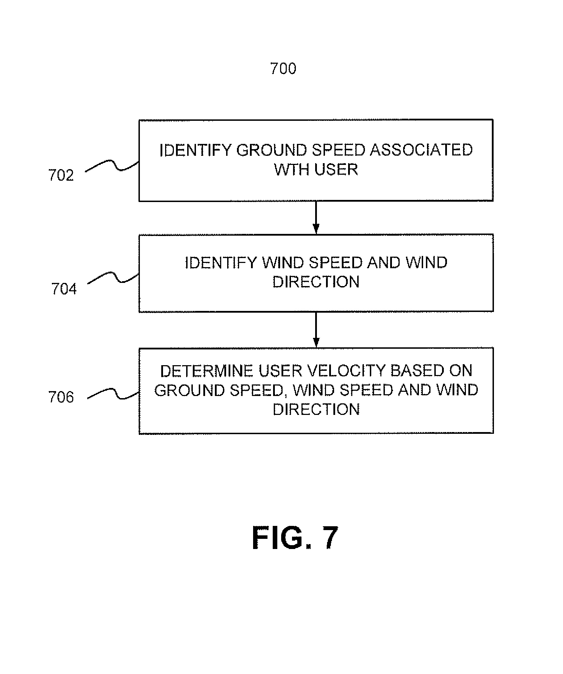

At block 612, headset 100 may output the wind direction and wind speed for wind 102 that blows towards user 102. Headset 100 may cause the wind speed and direction to be displayed on the GUI of an associated device. Alternatively, the wind speed and wind direction may be used as an input in determining user generated velocity as described with respect to process 700 and Fig. 7 below.

As described above, process 600 may repeat at predetermined intervals to provide a real time or near real time measurement of wind 120 with respect to user 102.

Fig. 7 is a flowchart of an exemplary process 700 for determining user generated velocity using a headset that includes binaural wind sensors 104-l and 104-r in a manner consistent with implementations described herein. Process 700 may execute in processor 302 that is associated with or integrated into a headset 100. It should be apparent that the process discussed below with respect to Fig. 7 represents a generalized illustration and that other elements may be added or existing elements may be removed, modified or rearranged without departing from the scope of process 700.

Headset 100 may identify a ground speed associated with user 102 (block 702). For example, headset 100 may include an associated GPS device that may provide data identifying a ground speed associated with user 102.

At block 704, headset 100 may identify a wind direction and wind speed of the wind, for example as described with respect to Fig. 6 and process 600 above.

At block 706, headset 100 may determine user generated velocity based on the ground speed of user 102 and the wind speed and direction. That is, headset 100 may determine what the user's velocity would be absent the wind. Headset 100 may adjust the determined user generated velocity based on additional factors, such as the weight of user 102, etc. Wind speed and wind direction may have a smaller effect on the user generated velocity for a larger user. The user's velocity, without the aid (e.g., a tailwind) or detriment (e.g., a headwind) of the wind may be used to provide the user with a more accurate measure of his/her movement/speed. This value may be used for calorie bringing calculations by headset 100.

The foregoing description of implementations provides illustration, but is not intended to be exhaustive or to limit the implementations to the precise form disclosed. Modifications and variations are possible in light of the above teachings within the scope of the invention as defined by the claims.

In the above, while series of blocks have been described with regard to the exemplary processes, the order of the blocks may be modified in other implementations. In addition, non-dependent blocks may represent acts that can be performed in parallel to other blocks. Further, depending on the implementation of functional components, some of the blocks may be omitted from one or more processes.

It will be apparent that aspects described herein may be implemented in many different forms of software, firmware, and hardware in the implementations illustrated in the figures. The actual software code or specialized control hardware used to implement aspects does not limit the invention. Thus, the operation and behavior of the aspects were described without reference to the specific software code - it being understood that software and control hardware can be designed to implement the aspects based on the description herein.

It should be emphasized that the term "comprises/comprising" when used in this specification is taken to specify the presence of stated features, integers, steps or components but does not preclude the presence or addition of one or more other features, integers, steps, components, or groups thereof.

Further, certain portions of the implementations have been described as "logic" that performs one or more functions. This logic may include hardware, such as a processor, a microprocessor, an application specific integrated circuit, or a field programmable gate array, software, or a combination of hardware and software.

No element, act, or instruction used in the present application should be construed as critical or essential to the implementations described herein unless explicitly described as such. Also, as used herein, the article "a" is intended to include one or more items. Further, the phrase "based on" is intended to mean "based, at least in part, on" unless explicitly stated otherwise.

## Claims

1. A computer-implemented method for a headset that includes binaural wind sensors (104-l, 104-r) to receive wind noise, wherein the binaural wind sensors (104-l, 104-r) include a left wind sensor and a right wind sensor, comprising:
receiving wind noise induced by wind at the binaural wind sensors (104-l, 104-r);
**characterized in** determining a sound energy density distribution of the wind noise based on the wind noise received at each of the binaural wind sensors (104-l, 104-r), wherein the sound energy distribution is a pattern of the wind noise based on a frequency and energy of the wind noise;
matching the sound energy density distribution to one of a plurality of reference sound energy density distributions, wherein each of the plurality of reference sound energy density distributions includes an associated wind speed and wind direction; and
identifying a wind speed and a wind direction corresponding to the matched reference sound energy density distribution.

2. The computer-implemented method of claim 1, further comprising:
identifying a ground speed associated with a user of the headset; and
determining a user generated velocity of the user based on the ground speed and the wind speed and wind direction.

3. The computer-implemented method of claim 1 or 2, further comprising:
determining one or more of a user energy consumption, or a user calorie consumption based on the user generated velocity.

4. The computer-implemented method of claim 1, 2 or 3, further comprising:
outputting the wind speed and wind direction to at least one associated device, wherein the at least one associated device is at least one of a digital running device, a wearable body monitor, a smart watch, or a mobile phone and the at least one associated device displays the wind speed and the wind direction.

5. The computer-implemented method of any of claims 1-4, wherein identifying the wind speed and the wind direction corresponding to the matched reference sound energy density distribution further comprises:
identifying a wind direction perpendicular to a lateral plane of the headset, wherein the wind direction is one of a tailwind or a headwind; and
differentiating between the headwind and the tailwind based on a side vector component of the headwind or tailwind.

6. The computer-implemented method of any of claims 1-5, wherein identifying the wind direction further comprises:
determining a difference in sound energy density value between wind noise at the left wind sensor and wind noise at the right wind sensor.

7. The computer-implemented method of any of claims 1-6, wherein the headset includes at least one associated sensor comprising one of a thermometer, or a barometer, the method further comprising:
determining an adjusted performance of a user based on the wind speed, wind direction and a metric determined by the at least one associated sensor.

8. The computer-implemented method of any of claims 1-7, further comprising:
determining a correlation between each of the plurality of reference sound energy density distributions and the associated wind speed and wind direction using a head mount sensing and positioning system.

9. The computer-implemented method of any of claims 1-8, further comprising:
determining a first ground speed of a user in a first direction;
determining a second ground speed of the user in an opposite direction to the first direction;
subtracting the second ground speed from the first ground speed to determine a difference between the second ground speed and the first ground speed; and
dividing the difference by two to determine the wind speed.

10. The computer-implemented method of any of claims 1-9, wherein the headset comprises one of an in-ear design headset or an on-ear design headset.

11. A headset device, comprising:
binaural wind sensors (104-l, 104-r) configured to receive wind noise, wherein the binaural wind sensors (104-l, 104-r) include a left wind sensor and a right wind sensor;
a memory to store a plurality of instructions; and
a processor configured to execute instructions in the memory to:
receive wind noise generated by wind at the binaural wind sensors (104-l, 104-r);
**characterized in that** the headset device is adapted to determine a sound energy density distribution of the wind noise based on the wind noise received at each of the binaural wind sensors (104-l, 104-r), wherein the sound energy distribution is a pattern of the wind noise based on a frequency and energy of the wind noise;
match the sound energy density distribution to one of a plurality of reference sound energy density distributions, wherein each of the plurality of reference sound energy density distributions includes an associated wind speed and wind direction; and
identify a wind speed and a wind direction corresponding to the matched reference sound energy density distribution.

12. The headset device of claim 11, wherein the processor is further configured to:
identify a ground speed associated with a user of the headset; and
determine a user generated velocity of the user based on the ground speed and the wind speed and wind direction.

13. The headset device of claim 11 or 12, wherein the processor is further configured to:
output the wind speed and wind direction to at least one associated device, wherein the at least one associated device is at least one of a digital running device, a wearable body monitor, a smart watch, or a mobile phone and the at least one associated device displays the wind speed and the wind direction.

14. The headset device of claim 11, 12 or 13, wherein, when identifying the wind speed and the wind direction corresponding to the matched reference sound energy density distribution, the processor is further configured to:
identify a wind direction perpendicular to a lateral plane of the headset, wherein the wind direction is one of a tailwind or a headwind; and
differentiate between the headwind and the tailwind based on a side vector component of the headwind or tailwind.

15. The headset device of any of claims 11-14, wherein the headset is an in-ear design headset and the binaural wind sensors (104-l, 104-r) face outwards from a user to substantially maximize the wind noise induced at the binaural wind sensors (104-l, 104-r).

## Patentansprüche

1. Ein computerimplementiertes Verfahren für ein Headset, welches binaurale Windsensoren (104-1, 104-r) zum Empfangen von Windgeräuschen umfasst, wobei die binauralen Windsensoren (104-1, 104-r) einen linken Windsensor und einen rechten Windsensor umfassen, umfassend:
Empfangen von durch Wind an den binauralen Windsensoren (104-1, 104-r) induzierten Windgeräuschen;
**gekennzeichnet durch** Bestimmen einer Klangenergiedichteverteilung der Windgeräusche basierend auf den an jedem der binauralen Windsensoren (104-1, 104-r) empfangenen Windgeräuschen, wobei die Klangenergieverteilung ein Muster der Windgeräusche basierend auf einer Frequenz und einer Energie der Windgeräusche ist;
Abgleichen der Klangenergiedichteverteilung zu einer von einer Vielzahl von Referenzklangenergiedichteverteilungen, wobei jede der Vielzahl von Referenzklangenergiedichteverteilungen eine zugeordnete Windgeschwindigkeit und Windrichtung umfasst; und
Identifizieren einer Windgeschwindigkeit und einer Windrichtung, welche zu der abgeglichen Referenzklangenergiedichteverteilung gehören.

2. Computerimplementiertes Verfahren aus Anspruch 1, weiter umfassend:
Identifizieren einer zu einem Anwender des Headsets zugeordneten Grundgeschwindigkeit; und
Bestimmen einer anwendererzeugten Geschwindigkeit des Anwenders basierend auf der Grundgeschwindigkeit und der Windgeschwindigkeit und Windrichtung.

3. Computerimplementiertes Verfahren aus Anspruch 1 oder 2, weiter umfassend:
Bestimmen von einem Anwenderenergieverbrauch und/oder einem Anwenderkalorienverbrauch basierend auf der anwendererzeugten Geschwindigkeit.

4. Computerimplementiertes Verfahren aus Anspruch 1, 2 oder 3, weiter umfassend:
Ausgeben der Windgeschwindigkeit und Windrichtung an zumindest eine zugeordnete Vorrichtung, wobei die zumindest eine zugeordnete Vorrichtung zumindest eine digitale Laufvorrichtung und/oder eine tragbare Körperüberwachungseinheit und/oder eine Smartwatch und/oder ein Mobiltelefon ist und die zumindest eine zugeordnete Vorrichtung die Windgeschwindigkeit und die Windrichtung anzeigt.

5. Computerimplementiertes Verfahren aus einem der Ansprüche 1-4, wobei Identifizieren der Windgeschwindigkeit und der Windrichtung, welche zu der abgeglichen Referenzklangenergiedichteverteilung gehören, weiter umfasst:
Identifizieren einer Windrichtung senkrecht zu einer Seitenfläche des Headsets, wobei die Windrichtung ein Rückenwind oder ein Gegenwind ist; und
Differenzieren zwischen dem Gegenwind und dem Rückenwind basierend auf einer Seitenvektorkomponente des Gegenwinds oder Rückenwinds.

6. Computerimplementiertes Verfahren aus einem der Ansprüche 1-5, wobei Identifizieren der Windrichtung weiter umfasst:
Bestimmen eines Unterschieds in einem Klangenergiedichtewert zwischen Windgeräuschen an dem linken Windsensor und Windgeräuschen an dem rechten Windsensor.

7. Computerimplementiertes Verfahren aus einem der Ansprüche 1-6, wobei das Headset zumindest einen zugeordneten Sensor umfasst, welcher ein Thermometer oder ein Barometer umfasst, wobei das Verfahren weiter umfasst:
Bestimmen einer angepassten Leistung eines Anwenders basierend auf der Windgeschwindigkeit, Windrichtung und einer durch den zumindest einen zugeordneten Sensor bestimmten Metrik.

8. Computerimplementiertes Verfahren aus einem der Ansprüche 1-7, weiter umfassend:
Bestimmen einer Korrelation zwischen einer jeden der Vielzahl von Referenzklangenergiedichteverteilungen und der zugeordneten Windgeschwindigkeit und Windrichtung unter Verwenden eines Kopfhalterung-Abtastungs- und Positionierungssystems.

9. Computerimplementiertes Verfahren aus einem der Ansprüche 1-8, weiter umfassend:
Bestimmen einer ersten Grundgeschwindigkeit eines Anwenders in einer ersten Richtung;
Bestimmen einer zweiten Grundgeschwindigkeit des Anwenders in einer entgegengesetzten Richtung zu der ersten Richtung;
Subtrahieren der zweiten Grundgeschwindigkeit von der ersten Grundgeschwindigkeit zum Bestimmen einer Differenz zwischen der zweiten Grundgeschwindigkeit und der ersten Grundgeschwindigkeit; und
Dividieren der Differenz durch zwei zum Bestimmen der Windgeschwindigkeit.

10. Computerimplementiertes Verfahren aus einem der Ansprüche 1-9, wobei das Headset ein In-Ohr-Design-Headset oder ein Am-Ohr-Design-Headset umfasst.

11. Eine Headsetvorrichtung, umfassend:
binaurale Windsensoren (104-1, 104-r), ausgebildet zum Empfangen von Windgeräuschen, wobei die binauralen Windsensoren (104-1, 104-r) einen linken Windsensor und einen rechten Windsensor umfassen;
einen Speicher zum Speichern einer Vielzahl von Anweisungen; und
einen Prozessor, ausgebildet zum Ausführen von Anwendungen in dem Speicher zum:
Empfangen von durch Wind an den binauralen Windsensoren (104-1, 104-r) erzeugten Windgeräuschen;
**gekennzeichnet dadurch, dass** die Headsetvorrichtung zum Bestimmen einer Klangenergiedichteverteilung der Windgeräusche basierend auf den an jedem der binauralen Windsensoren (104-1, 104-r) empfangenen Windgeräuschen angepasst ist, wobei die Klangenergieverteilung ein Muster der Windgeräusche basierend auf einer Frequenz und einer Energie der Windgeräusche ist;
Abgleichen der Klangenergiedichteverteilung auf eine einer Vielzahl von Referenzklangenergiedichteverteilungen, wobei jede der Vielzahl von Referenzklangenergiedichteverteilungen eine zugeordnete Windgeschwindigkeit und Windrichtung umfasst; und
Identifizieren einer Windgeschwindigkeit und einer Windrichtung, welche zu der abgeglichen Referenzklangenergiedichteverteilung gehört.

12. Headsetvorrichtung aus Anspruch 11, wobei der Prozessor weiter ausgebildet ist zum:
Identifizieren einer zu einem Anwender des Headsets zugeordneten Grundgeschwindigkeit; und
Bestimmen einer anwendererzeugten Geschwindigkeit des Anwenders basierend auf der Grundgeschwindigkeit und der Windgeschwindigkeit und Windrichtung.

13. Headsetvorrichtung aus Anspruch 11 oder 12, wobei der Prozessor weiter ausgebildet ist zum:
Ausgeben der Windgeschwindigkeit und Windrichtung an zumindest eine zugeordnete Vorrichtung, wobei die zumindest eine zugeordnete Vorrichtung zumindest eine digitale Laufvorrichtung und/oder eine tragbare Körperüberwachungseinheit und/oder eine Smartwatch und/oder ein Mobiltelefon ist und die zumindest eine zugeordnete Vorrichtung die Windgeschwindigkeit und die Windrichtung anzeigt.

14. Headsetvorrichtung aus Anspruch 11, 12 oder 13, wobei, wenn die Windgeschwindigkeit und die Windrichtung, welche zu der abgeglichen Referenzklangenergiedichteverteilung gehört, identifiziert wird, der Prozessor weiter ausgebildet ist zum:
Identifizieren einer Windrichtung senkrecht zu einer Seitenfläche des Headsets, wobei die Windrichtung ein Rückenwind oder ein Gegenwind ist; und
Differenzieren zwischen dem Gegenwind und dem Rückenwind basierend auf einer Seitenvektorkomponente des Gegenwinds oder Rückenwinds.

15. Headsetvorrichtung aus einem der Ansprüche 11 bis 14, wobei das Headset ein In-Ohr-Design-Headset ist und die binauralen Windsensoren (104-1, 104-r) von einem Anwender nach außen zeigen, um die an den binauralen Windgeräuschen (104-1, 104-r) induzierten Windgeräusche wesentlich zu maximieren.

## Revendications

1. Procédé mis en oeuvre sur ordinateur, pour un casque qui comprend des détecteurs de vent binauraux (104-1, 104-r) destinés à recevoir le bruit du vent, dans lequel les détecteurs de vent binauraux (104-1, 104-r) comprennent un capteur de vent droit et un capteur de vent gauche, comprenant l'étape consistant à :
recevoir le bruit de vent induit par le vent au niveau des détecteurs de vent binauraux (104-1, 104-r) ;
**caractérisé par** les étapes consistant à :
déterminer une distribution de densité d'énergie sonore du bruit de vent, en fonction du bruit de vent reçu sur chacun des détecteurs de vent binauraux (104-1, 104-r), la distribution de l'énergie sonore étant un motif du bruit de vent fondé sur la fréquence et l'énergie du bruit de vent ;
faire correspondre la distribution de densité d'énergie sonore avec une distribution parmi une pluralité de distributions de densité d'énergie sonore de référence, chacune de la pluralité de distributions de densité d'énergie sonore de référence comprend une vitesse du vent et une direction du vent qui lui sont associées ; et
identifier une vitesse du vent et une direction du vent qui correspondent à la distribution de densité d'énergie sonore mise en correspondance.

2. Procédé mis en oeuvre sur ordinateur selon la revendication 1, comprenant en outre les étapes consistant à :
identifier une vitesse au sol associée à un utilisateur du casque ; et
déterminer la vélocité de l'utilisateur, produite par l'utilisateur, en fonction de la vitesse au sol ainsi que de la vitesse du vent et de la direction du vent.

3. Procédé mis en oeuvre sur ordinateur selon la revendication 1 ou 2, comprenant en outre l'étape consistant à :
déterminer au moins soit la consommation d'énergie de l'utilisateur, soit la consommation de calories de l'utilisateur, en fonction de la vélocité produite par l'utilisateur.

4. Procédé mis en oeuvre sur ordinateur selon la revendication 1, 2 ou 3, comprenant en outre l'étape consistant à :
délivrer en sortie la vitesse du vent et la direction du vent sur au moins un dispositif associé, ledit au moins un dispositif associé étant au moins l'un d'un boîtier numérique pour coureur, d'une montre intelligente ou d'un téléphone mobile et ledit au moins un dispositif associé affichant la vitesse du vent et la direction du vent.

5. Procédé selon l'une quelconque des revendications 1 à 4, dans lequel l'étape d'identification de la vitesse du vent et de la direction du vent qui correspondent à la distribution de densité d'énergie sonore mise en correspondance comprend en outre les étapes consistant à :
identifier une direction du vent perpendiculaire à un plan latéral du casque, la direction du vent étant l'une d'un vent de face et d'un vent de dos ; et
faire la différence entre le vent de face et le vent de dos en fonction d'une composante vectorielle latérale du vent de face ou du vent de dos.

6. Procédé selon l'une quelconque des revendications 1 à 5, dans lequel l'étape d'identification de la direction du vent comprend en outre l'étape consistant à :
déterminer une différence dans la valeur de densité d'énergie sonore entre le bruit du vent sur le capteur de vent gauche et le bruit du vent sur le capteur de vent droit.

7. Procédé selon l'une quelconque des revendications 1 à 6, dans lequel le casque comprend au moins un capteur associé consistant en l'un d'un thermomètre ou d'un baromètre, le procédé comprenant en outre l'étape consistant à :
déterminer une performance ajustée d'un utilisateur en fonction de la vitesse du vent, de la direction du vent et d'une donnée métrique déterminée par ledit au moins un capteur associé.

8. Procédé selon l'une quelconque des revendications 1 à 7, comprenant en outre l'étape consistant à :
déterminer une corrélation entre chacune de la pluralité de distributions de densité d'énergie sonore et les vitesse du vent et direction du vent associées à l'aide d'un système de détection et de positionnement porté sur la tête.

9. Procédé selon l'une quelconque des revendications 1 à 8, comprenant en outre les étapes consistant à :
déterminer une première vitesse au sol d'un utilisateur dans une première direction ;
déterminer une seconde vitesse au sol de l'utilisateur dans une direction opposée à la première direction ;
soustraire la seconde vitesse au sol de la première vitesse au sol pour déterminer une différence entre la seconde vitesse au sol et la première vitesse au sol ; et
diviser la différence par deux pour déterminer la vitesse du vent.

10. Procédé selon l'une quelconque des revendications 1 à 9, dans lequel le casque consiste en l'un d'un casque intra-auriculaire ou d'un casque supra-auriculaire.

11. Dispositif de casque comprenant :
des détecteurs de vent binauraux (104-1, 104-r) configurés pour recevoir le bruit du vent, les détecteurs de vent binauraux (104-1, 104-r) comprenant un capteur de vent droit et un capteur de vent gauche ;
une mémoire destinée à stocker une pluralité d'instructions ; et
un processeur configuré pour exécuter des instructions dans la mémoire afin de :
recevoir le bruit de vent induit par le vent au niveau des détecteurs de vent binauraux (104-1, 104-r) ;
**caractérisé en ce que** le dispositif de casque est conçu pour déterminer une distribution de densité d'énergie sonore du bruit de vent, en fonction du bruit de vent reçu sur chacun des détecteurs de vent binauraux (104-1, 104-r), la distribution de l'énergie sonore étant un motif du bruit de vent fondé sur la fréquence et l'énergie du bruit de vent ;
faire correspondre la distribution de densité d'énergie sonore avec l'une d'une pluralité de distributions de densité d'énergie sonore de référence, chacune de la pluralité de distributions de densité d'énergie sonore de référence comprenant une vitesse du vent et une direction du vent qui lui sont associées ; et
identifier une vitesse du vent et une direction du vent qui correspondent à la distribution de densité d'énergie sonore mise en correspondance.

12. Dispositif de casque selon la revendication 11, dans lequel le processeur est en outre configuré pour :
identifier une vitesse au sol associée à un utilisateur du casque ; et
déterminer la vélocité de l'utilisateur, produite par l'utilisateur, en fonction de la vitesse au sol ainsi que de la vitesse du vent et de la direction du vent.

13. Dispositif de casque selon la revendication 11 ou 12, dans lequel le processeur est en outre configuré pour :
délivrer en sortie la vitesse du vent et la direction du vent sur au moins un dispositif associé, ledit au moins un dispositif associé étant au moins l'un d'un boîtier numérique pour coureur, d'une montre intelligente ou d'un téléphone mobile et ledit au moins un dispositif associé affichant la vitesse du vent et la direction du vent.

14. Dispositif de casque selon la revendication 11, 12 ou 13, dans lequel, pour identifier la vitesse du vent et la direction du vent qui correspondent à la distribution de densité d'énergie sonore mise en correspondance, le processeur est en outre configuré pour :
identifier une direction du vent perpendiculaire à un plan latéral du casque, la direction du vent étant l'une d'un vent de face ou d'un vent de dos ; et
faire la différence entre le vent de face et le vent de dos en fonction d'une composante vectorielle latérale du vent de face ou du vent de dos.

15. Dispositif de casque selon l'une quelconque des revendications 11 à 14, le casque étant un casque intra-auriculaire et les détecteurs de vent binauraux (104-1, 104-r) étant tournés vers l'extérieur par rapport à un utilisateur afin de substantiellement maximiser le bruit du vent au niveau des détecteurs de vent binauraux (104-1, 104-r).
